(19) Europäisches Patentamt
European Patent Office
Office européen des brevets

(11) **EP 1 631 756 B1**

(12) **EUROPÄISCHE PATENTSCHRIFT**

(45) Veröffentlichungstag und Bekanntmachung des Hinweises auf die Patenterteilung:
**01.12.2010 Patentblatt 2010/48**

(21) Anmeldenummer: **04739506.6**

(22) Anmeldetag: **01.06.2004**

(51) Int Cl.:
*F16H 3/00* *(2006.01)*    *F16H 3/093* *(2006.01)*

(86) Internationale Anmeldenummer:
**PCT/EP2004/005920**

(87) Internationale Veröffentlichungsnummer:
**WO 2004/109154 (16.12.2004 Gazette 2004/51)**

(54) **DOPPELKUPPLLUNGSGETRIEBE**

TWIN-CLUTCH TRANSMISSION

BOITE DE VITESSES A DOUBLE EMBRAYAGE

(84) Benannte Vertragsstaaten:
**DE FR GB IT SE**

(30) Priorität: **06.06.2003 DE 10325647**

(43) Veröffentlichungstag der Anmeldung:
**08.03.2006 Patentblatt 2006/10**

(73) Patentinhaber: **Daimler AG**
**70327 Stuttgart (DE)**

(72) Erfinder: **GITT, Carsten**
**70327 Stuttgart (DE)**

(74) Vertreter: **JENSEN & SON**
**366-368 Old Street**
**London**
**EC1V 9LT (GB)**

(56) Entgegenhaltungen:
EP-A- 0 354 890    WO-A-94/07055
DE-A- 10 060 699    DE-A- 19 755 432
DE-C- 958 081    US-A- 2 543 412
US-A- 3 046 807    US-A- 3 425 290
US-A- 4 375 171    US-A- 4 614 133
US-A- 5 367 914

**Beschreibung**

Die Erfindung betrifft ein Doppelkupplungsgetriebe gemäß dem Oberbegriff des Patentanspruchs 1.

Ein gattungsgemäßes Doppelkupplungsgetriebe ist aus der Druckschrift WO 94/07 055 A bekannt. Weitere Doppelkupplungsgetriebe sind beispielsweise aus den Druckschriften DE 19 860 251 C1, WO 00/39484, US 6,250,171 B1, DE 199 39 334 A1, DE 198 21 164 A1, DE 101 08 881 A1, DE 101 02 028 A1, US 6,427,547 B1, DE 100 15 336 A1 sowie der Veröffentlichung von Tenberge, P.: "Doppelkupplungsgetriebe in Windungsanordnung", VDI-Seminar Nr. 31 03 01 "Stufenlose Fahrzeuggetriebe", Stuttgart, 2001, bekannt.

Der Erfindung liegt die Aufgabe zugrunde, unter Beachtung des Bauteilaufwandes ein kompaktes Doppelkupplungsgetriebe vorzuschlagen.

Die der Erfindung zugrundeliegende Aufgabe wird gelöst durch die Merkmale des Patentanspruchs 1.

Demgemäß ist das Doppelkupplungsgetriebe mit N (insbesondere sequentiell) unter Last schaltbaren Vorwärtsgängen und mindestens einem Rückwärtsgang ausgestattet und verfügt über zwei koaxial zueinander und zu einer Getriebeachse angeordnete Zwischenwellen. Die Zwischenwellen sind nach Maßgabe einer Doppelkupplung jeweils mit einer Eingangswelle in Antriebsverbindung bringbar, wobei eine Zwischenwelle als Hohlwelle ausgebildet ist. Gegenüber einer Bauform mit nicht koaxial zueinander angeordneten Zwischenwellen, beispielsweise entsprechend der Druckschrift US 6,427,547 B1, hat die Erfindung den Vorteil, insbesondere im Bereich der Kupplungen, also im vorderen Teilbereich des Getriebes, über eine geringe radiale Baugröße zu verfügen. Dieses kann von Vorteil sein beispielsweise hinsichtlich einer Integration des Getriebes in einen Fahrzeugtunnel oder zur Erzielung einer notwendigen Bodenfreiheit des Kraftfahrzeuges.

Weiterhin verfügt das erfindungsgemäße Doppelkupplungsgetriebe über zwei Vorgelegewellen. Diese sind parallel zueinander sowie parallel zu der Getriebeachse angeordnet. Im Vergleich zu einer Ausgestaltung mit zwei koaxial zueinander angeordneten Vorgelegewellen, von denen eine als Hohlwelle ausgebildet ist, vgl. z. B. WO 00/39484, ergibt sich durch die erfindungsgemäße Ausgestaltung eine axiale kürzere Bauweise.

Eine Eingangswelle des Doppelkupplungsgetriebes sowie eine Getriebeabtriebswelle sind jeweils koaxial zu der Getriebeachse angeordnet. Hierdurch kann ein Achsversatz vermieden werden..

Für mindestens einen Vorwärtsgang A sind zwischen die Eingangswelle und die Getriebeabtriebswelle vier Übersetzungsstufen zwischengeschaltet. Die Gesamtübersetzung zur Getriebeabtriebswelle ergibt sich demgemäß aus dem Produkt der vier einzelnen Übersetzungsstufen. Für mindestens eine weitere Vorwärtsgangsstufe B sind lediglich zwei Übersetzungsstufen zwischen die Eingangswelle und die Getriebeabtriebswelle zwischengeschaltet. Für mindestens einen Vorwärtsgang A sowie einen Vorwärtsgang B erfolgt der Kraftfluss über (mindestens) ein gleiches Zahnrad. Erfindungsgemäß ist somit ein Zahnrad multifunktional ausgebildet, wodurch sich ein verringerter Bauraumbedarf und/oder eine Verringerung der notwendigen Bauteile ergeben kann. Alternativ oder zusätzlich ergeben sich verbesserte Möglichkeiten hinsichtlich der Stufung der Vorwärtsgänge. Insbesondere ist eine Ausführung mit verhältnismäßig kurzen Getriebewellen möglich, so dass sich unter Last im Vergleich zu anderen Getriebeanordnungen geringere Wellendurchbiegungen einstellen bzw. die Wellenquerschnitte geringer dimensioniert werden. Gleichermaßen verringert sich die Belastung der die Getriebewellen lagernden Wälzlager infolge einer Verkürzung der Hebelarme für die Abstützung.

Bei dem mindestens einen Vorwärtsgang A handelt es sich um einen ersten Vorwärtsgang (bzw. die ersten Vorwärtsgänge), für welchen zwischen die Eingangswelle und eine Getriebeabtriebswelle vier Übersetzungsstufen zugeschaltet sind. Erfindungsgemäß kann über die derart in der ersten Gangstufe zwischengeschalteten zusätzlichen zwei Übersetzungsstufen für die Realisierung des ersten Vorwärtsganges eine zusätzliche Übersetzung ins Langsame realisiert werden. Hierdurch kann die erste Eingangsstufe des Getriebes, d. h. eine erste Übersetzungsstufe zwischen Zwischenwelle und Vorgelegewelle, relativ "lang" ausgelegt werden. Dies hat insbesondere folgende Vorteile:

■ Das in die Vorgelegewelle mittels der ersten Eingangsstufe eingeleitete Drehmoment ist geringer als wenn eine relativ kurze Eingangsübersetzung verwendet werden würde. Dieses hat hinsichtlich der Dimensionierung der beteiligten Bauteile Vorteile.

■ Bei einer ungeraden Anzahl von Vorwärtsgängen ist der höchste Vorwärtsgang derselben Eingangsstufe zugeordnet wie der erste Vorwärtsgang. Infolge der langen Auslegung der ersten Eingangsstufe kann die Getriebestufe zur Realisierung des höchsten Ganges verhältnismäßig "kurz" ausgelegt werden oder aber in dem höchsten Gang eine besonders lange Gesamtübersetzung erzielt werden.

Für den mindestens einen Vorwärtsgang A mit vier zwischengeschalteten Übersetzungsstufen in den Kraftfluss sind zwischen Eingangswelle und Getriebeabtriebswelle zwei Zahnräder zwischengeschaltet, welche drehfest miteinander verbunden (bzw. verbindbar) sind. Die Zahnräder rotieren um die (Haupt-) Getriebeachse. In einem Vorwärtsgang A übernimmt eines der vorgenannten Zahnräder das Antriebsmoment von einer Vorgelegewelle, während das andere Zahnrad das Antriebsmoment an die andere Vorgelegewelle übergibt. Insbesondere erfolgt somit in dem Vorwärtsgang A eine Übergabe des Antriebsmomentes von einer Zwischenwelle zu einer Vorgelegewelle, den Zahnrädern, der anderen Vorgelegewelle zur Abtriebswelle, jeweils unter Zwischenschaltung einer Getriebestufe. Erfindungsgemäß sind somit beide mit den jeweiligen Vorgelegewellen gebildeten Teilgetriebe hintereinandergeschaltet in den Kraftfluss gebracht

In wenigstens einem weiteren Vorwärtsgang B überträgt zumindest eines der vorgenannten Zahnräder das Antriebsmoment unmittelbar, d. h. unter Zwischenschaltung einer mit diesem Zahnrad gebildeten Getriebestufe, von einer Zwischenwelle auf eine Vorgelegewelle, von welcher das Antriebsmoment über eine weitere Getriebestufe an die Getriebeabtriebswelle übergeben wird. Auf diese Weise bilden die miteinander verbundenen Zahnräder eine mehrfach nutzbare Zwischenstufe. Eine besonders vorteilhafte Ausgestaltung ergibt sich, wenn in einem weiteren Vorwärtsgang B das andere der vorgenannten Zahnräder das Antriebsmoment unmittelbar, d. h. unter Zwischenschaltung einer mit diesem Zahnrad gebildeten Getriebestufe, von derselben Zwischenwelle auf dieselbe oder die andere Vorgelegewelle übergibt.

Gemäß einem weiteren Vorschlag der Erfindung verfügt das Doppelkupplungsgetriebe über einen Vorwärtsgang, welcher als Direktgang ausgebildet ist. Hierbei handelt es sich insbesondere um den vorvorletzten, den vorletzten oder den letzten Vorwärtsgang. Hierdurch können Verbesserungen des Wirkungsgrades erzielt werden.

Bei einem bevorzugten Doppelkupplungsgetriebe ist die dem niedrigsten Vorwärtsgang zugeordnete Eingangsübersetzung länger ausgelegt als die andere Eingangsübersetzung. Dies hat vorteile, wenn die höchste Gangstufe ein ungerader Gang ist, beispielsweise ein siebter Gang. In diesem Fall kann die der Eingangsübersetzung nachgeschaltete Getriebestufe zur Realisierung des siebten Ganges länger ausgelegt werden. Insbesondere ist die länger ausgelegte Eingangsübersetzung näher zur Doppelkupplung angeordnet als die andere Eingangsübersetzung. Durch den verhältnismäßig großen Durchmesser des Zahnrades, welches der länger ausgelegten Eingangsübersetzung entspricht, kann die Lagerung für die dem anderen Zahnrad zugeordnete Zwischenwelle vorteilhaft relativ weit unter die der länger ausgelegten Eingangsübersetzung zugeordnete Verzahnung gezogen werden.

Erfindungsgemäß verfügt das Doppelkupplungsgetriebe insbesondere über mindestens sieben Gänge, welche über vier Schaltelemente schaltbar sind. Gegenüber dem Stand der Technik ergibt sich somit eine Verringerung der Zahl der Schaltelemente, was mit einer Verringerung des Gewichtes, der erforderlichen Bauteile, des Bauraumes und/oder der Kosten einhergeht.

Vorzugsweise ist eines der vorgenannten Zahnräder schrägverzahnt mit einem Winkel $\alpha$. Das andere Zahnrad ist schrägverzahnt mit einem Winkel $\beta$. Die Winkel $\alpha$ und $\beta$ weisen gleiche Vorzeichen auf und sind derart dimensioniert, dass sich die auf die beiden Zahnräder in dem ersten Vorwärtsgang wirkenden Axialkräfte ungefähr aufheben. Hierdurch können notwendige Lagerkräfte für die Zahnräder bzw. eine die Zahnräder lagernde Hohlwelle vermindert werden, was beispielsweise zu einer geringeren Dimensionierung und/oder erhöhten Laufzeit führt.

Das Doppelkupplungsgetriebe verfügt über ein Schaltelement, welches seine Neutralstellung in einer äußeren Schaltstellung hat, in einer ersten Schaltstellung eine Zwischenwelle mit der Getriebeabtriebswelle verbindet, so dass ein Direktgang gebildet ist, in einer zweiten Schaltstellung die vorgenannten Zahnräder mit der Getriebeabtriebswelle verbindet und in einer dritten Schaltstellung keine Verbindung zwischen zugeordneten Getriebeelementen herstellt, wobei die zweite Schaltstellung zwischen der ersten Schaltstellung und der dritten Schaltstellung liegt. Somit bildet eine äußere Schaltstellung des Schaltelementes eine "Neutralstellung". Vorzugsweise sind die vorgenannten Zahnräder über dasselbe Schaltelement in der ersten mit der zugeordneten Zwischenwelle drehfest verbunden. Hierdurch ist eine einfache Lastschaltung von dem Direktgang zu einem benachbarten Gang ermöglicht.

Vorzugsweise sind die beiden Vorgelegewellen und die Getriebeachse im Querschnitt dreiecksförmig angeordnet. Hierdurch ergibt sich eine besonders kompakte Bauweise, insbesondere eine geringe Erstreckung des Doppelkupplungsgetriebes quer zur Getriebeachse.

Vorteilhafte Weiterbildungen ergeben sich aus den Unteransprüchen, der Beschreibung und den Zeichnungen. Bevorzugte Ausführungsbeispiele des erfindungsgemäßen Doppelkupplungsgetriebes werden nachfolgend anhand der Zeichnung näher erläutert. Die Zeichnung zeigt:

Fig. 1    einen Räderplan eines Doppelkupplungsgetriebes gemäß einer ersten Ausgestaltungsform,

Fig. 2    eine Tabelle für die Schaltzustände der Kupplungen und Schaltelemente für das Doppelkupplungsgetriebe gemäß Fig. 1,

Fig. 3    einen Räderplan des in Figur 1 dargestellten Doppel- kupplungsgetriebes in einem ersten Vorwärtsgang,

Fig. 4    einen Räderplan des Doppelkupplungsgetriebes gemäß Fig. 1 in einem sechsten Vorwärtsgang,

Fig. 5    einen Räderplan eines erfindungsgemäßen Doppelkupp- lungsgetriebes gemäß einer zweiten Ausführungsform der Erfindung,

Fig. 6    eine Tabelle der Schaltzustände der Kupplungen und Schaltelemente für das in Fig. 5 dargestellte Doppel- kupplungsgetriebe,

Fig. 7     einen Räderplan eines Doppelkupplungsgetriebes gemäß einer dritten Ausführungsform der Erfindung,

Fig. 8     eine Tabelle der Schaltzustände der Kupplungen und Schaltelemente des Doppelkupplungsgetriebes gemäß Fig. 7,

Fig. 9     einen Räderplan eines Doppelkupplungsgetriebes gemäß einer vierten Ausführungsform der Erfindung und

Fig. 10    eine Tabelle der Schaltzustände der Kupplungen und Schaltelemente des Doppelkupplungsgetriebes gemäß Fig. 9.

Ein erfindungsgemäßes Doppelkupplungsgetriebe 10 findet Einsatz in einem Antriebsstrang eines Kraftfahrzeuges. Hierbei ist das Doppelkupplungsgetriebe 10 zwischen ein Antriebsaggregat und eine Abtriebswelle, beispielsweise eine Gelenk- oder Kardanwelle, zwischengeschaltet. Vorzugsweise handelt es sich um einen Standardantriebsstrang mit einem Antriebsaggregat, welches im Front-Längseinbau angeordnet ist, und mit Heckantrieb.

Das Doppelkupplungsgetriebe weist eine Eingangswelle 11, insbesondere eine Kurbelwelle oder eine mit dieser umlaufende Welle, sowie eine Getriebeabtriebswelle 12 auf. Die Eingangswelle 11 und Getriebeabtriebswelle 12 sind koaxial zu einer Getriebeachse X-X angeordnet. Die Eingangswelle ist, ggf. unter Zwischenschaltung mindestens einer weiteren Getriebestufe, mit einem Antriebsaggregat verbunden. Die Getriebeabtriebswelle 12 ist, ggf. unter Zwischenschaltung mindestens einer weiteren Getriebestufe, mit Fahrzeugrädern verbunden.

Die Eingangswelle 11 steht in Antriebsverbindung mit einer hier als eine Baueinheit ausgebildeten Doppelkupplung 13. Die Doppelkupplung 13 verfügt über eine Kupplung K1 sowie eine Kupplung K2, welche über geeignete, nicht dargestellte Einrichtungen und unter Gewährleistung einer geeigneten Überschneidungssteuerung das Antriebsmoment der Eingangswelle 11 für geschlossene Kupplung K2 auf die Zwischenwelle 14 übertragen und für geschlossene Kupplung K1 auf die Zwischenwelle 15 übertragen. Die Kupplung K1 ist in Richtung der Getriebeachse X-X (im Folgenden "in axialer Richtung") auf der dem Antriebsaggregat abgewandten Seite der Kupplung K2 angeordnet. Die Zwischenwelle 15 ist als Hohlwelle ausgebildet und ist radial innenliegend von der Zwischenwelle 14 durchdrungen. In dem der Doppelkupplung 13 abgewandten Endbereich der Zwischenwelle 15 erfolgt die Übergabe eines Antriebsmomentes von der Zwischenwelle 15 auf eine Vorgelegewelle 16 über eine Konstante 17, welche eine Eingangsübersetzung bildet und über ein mit der Zwischenwelle 15 drehfest verbundenes Antriebszahnrad 18 sowie ein drehfest mit der Vorgelegewelle 16 verbundenes Abtriebszahnrad 19 verfügt.

Drehfest mit der Vorgelegewelle 16 verbunden ist ein Antriebszahnrad 20 einer Gangstufe VII. Über ein Schaltelement 21 ist die Vorgelegewelle 16 in einer Schaltstellung S3 drehfest mit einem einer Gangstufe V zugeordneten Antriebszahnrad 22 verbindbar, in einer Schaltstellung S4 mit einem Antriebszahnrad 22 einer Gangstufe III verbindbar sowie in einer zwischen den Schaltstellungen S3 und S4 liegenden Neutralstellung unabhängig von den Antriebszahnrädern 20, 22.

In einem aus der Zwischenwelle 15 herausragenden Endbereich der Zwischenwelle 14 ist diese drehfest mit einem Antriebszahnrad 24 einer Konstante 25 verbunden, welche die Eingangsübersetzung zwischen Zwischenwelle 14 und einer weiteren Vorgelegewelle 26 bildet. Mit der Vorgelegewelle 26 drehfest verbunden ist das Abtriebszahnrad 27 der Konstante 25 sowie ein Antriebszahnrad 28 der Gangstufen I, II. Über ein Schaltelement 29 ist in einer Schaltstellung S5 ein Antriebszahnrad 30 einer Gangstufe IV, in einer Schaltstellung S6 ein Antriebszahnrad 31 einer Gangstufe RI, RII mit der Vorgelegewelle 26 verbindbar, während in einer zwischen den Schaltstellungen S5 und S6 liegenden Neutralstellung die Antriebszahnräder 30, 31 keine drehfeste Verbindung mit der Vorgelegewelle 26 aufweisen.

Ein Schaltelement 32 wirkt zwischen der Zwischenwelle 14, der Getriebeabtriebswelle 12 und einer die Getriebeabtriebswelle 12 radial innenliegend aufnehmenden Hohlwelle 33. In einer Schaltstellung S1 stellt das Schaltelement 32 eine drehfeste Verbindung zwischen Zwischenwelle 14, Getriebeabtriebswelle 12 und Hohlwelle 33 her. In einer Mittenstellung stellt das Schaltelement 32 eine drehfeste Verbindung zwischen Hohlwelle 33 und Getriebeabtriebswelle 12 her. In einer Schaltstellung S2 besteht keine Antriebsverbindung zwischen Zwischenwelle 14, Getriebeabtriebswelle 12 und Hohlwelle 33. Die Hohlwelle 33 trägt das der Gangstufe V sowie in Umfangsrichtung versetzt der Gangstufe IV zugeordnete Zahnrad 34, welches mit den Antriebszahnrädern 22 und 30 kämmt, sowie das der Gangstufe III zugeordnete Zahnrad 35, welches mit dem Antriebszahnrad 23 kämmt.

Ein Schaltelement 36 wirkt zwischen der Getriebeabtriebswelle 12 und den Zahnrädern 37, 38. In einer Schaltstellung S7 verbindet das Schaltelement 36 die Getriebeabtriebswelle 12 mit dem Zahnrad 37. In einer Schaltstellung S8 verbindet das Schaltelement 36 die Getriebeabtriebswelle mit dem Zahnrad 38. In einer zwischen den Schaltstellungen S7 und S8 liegenden Neutralstellung verfügen die Zahnräder 37, 38 und die Getriebeabtriebswelle 12 über keine Antriebsverbindung über das Schaltelement 36. Das Zahnrad 38 bildet mit dem Antriebszahnrad 28 die Gangstufe I, II. Das Zahnrad 37 bildet einerseits mit dem Antriebszahnrad 20 die Gangstufe VII. In Umfangsrichtung versetzt zum Antriebszahnrad 20 kämmt darüber hinaus das Zahnrad 37 mit einem Rückwärtsgangrad 39, welches wiederum in Antriebsverbindung mit dem Antriebszahnrad 31 zur Bildung der Gangstufe RI, RII steht.

In Getriebeebenen, welche quer (im Folgenden "radial") zur Getriebeachse X-X orientiert sind, sind in der folgenden Reihenfolge axial hintereinanderliegend angeordnet:

- die Doppelkupplung 13,
- die Konstante 17 mit Antriebszahnrad 18 und Abtriebszahnrad 19,
- die Konstante 25 mit Antriebszahnrad 24 und Abtriebszahnrad 27,
- Schaltelement 32,
- Gangstufe V mit Antriebszahnrad 22 und Zahnrad 34 sowie Gangstufe IV mit Antriebszahnrad 30 und Zahnrad 34,
- Schaltelemente 29, 21,
- Gangstufe III mit Antriebszahnrad 23 und Zahnrad 35 sowie Gangstufe RI, RII mit Antriebszahnrad 31, Rückwärtsgangrad 39 und Zahnrad 37,
- Schaltelement 36 und
- Gangstufe I, II mit Antriebszahnrad 28 und Zahnrad 38.

In einem zweiten Rückwärtsgang ist bei geöffneter Kupplung K1 die Kupplung K2 geschlossen. Schaltelement 32 befindet sich in der Mittenstellung, Schaltelement 21 in der Schaltstellung S3, Schaltelement 29 in Schaltstellung S6 und Schaltelement 36 in Neutralstellung. Der Kraftfluss verläuft über Eingangswelle 11, Kupplung K2, Zwischenwelle 14, Antriebszahnrad 24, Abtriebszahnrad 27, Vorgelegewelle 26, Schaltelement 29, Antriebszahnrad 31, Rückwärtsgangrad 39, Zahnrad 37, Antriebszahnrad 20, Vorgelegewelle 16, Schaltelement 21, Antriebszahnrad 22, Zahnrad 34, Schaltelement 32 zur Getriebeabtriebswelle 12.

In einem ersten Rückwärtsgang ist die Kupplung K2 geschlossen, Schaltelement 32 befindet sich in Mittenstellung, Schaltelement 21 in Schaltstellung S4, Schaltelement 29 in Schaltstellung S6 und Schaltelement 36 in Neutralstellung. In diesem Fall verläuft der Kraftfluss über die Eingangswelle 11, Kupplung K2, Zwischenwelle 14, Antriebszahnrad 24, Abtriebszahnrad 27, Vorgelegewelle 26, Schaltelement 29, Antriebszahnrad 31, Rückwärtsgangsrad 39, Zahnrad 37, Antriebszahnrad 20, Vorgelegewelle 16, Schaltelement 21, Antriebszahnrad 23, Zahnrad 35, Schaltelement 32 zur Getriebeabtriebswelle 12.

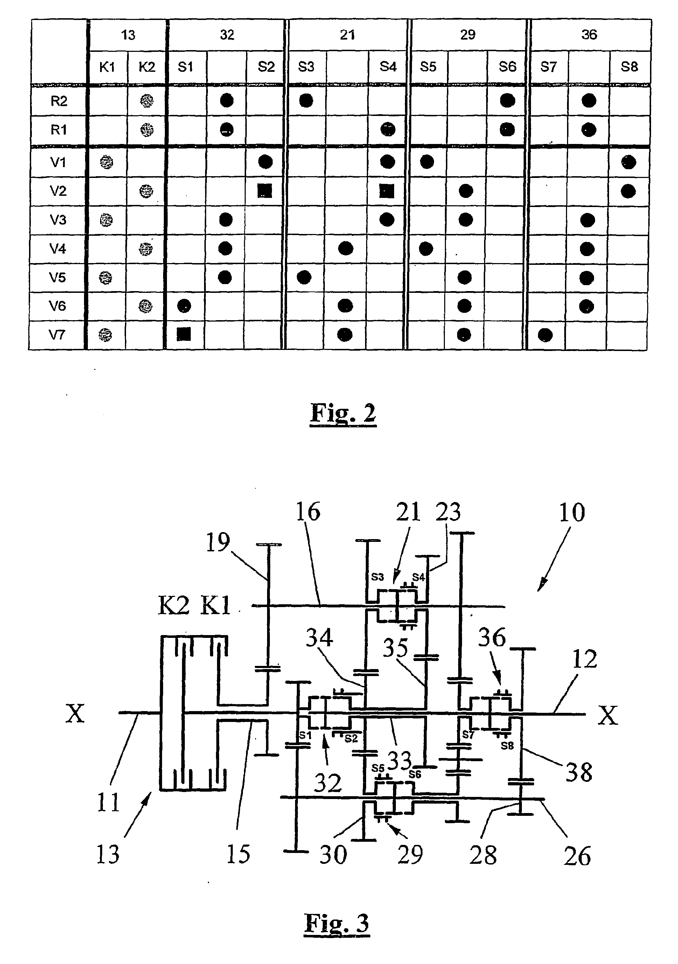

In einem ersten Vorwärtsgang verläuft der Kraftfluss von einer Eingangswelle 11 über Kupplung K1, Zwischenwelle 15, Antriebszahnrad 18, Abtriebszahnrad 19, Vorgelegewelle 16, Schaltelement 21, Antriebszahnrad 23, Zahnrad 35, Hohlwelle 33, Zahnrad 34, Antriebszahnrad 30, Schaltelement 29, Vorgelegewelle 26, Antriebszahnrad 28, Zahnrad 38, Schaltelement 36 zur Getriebeabtriebswelle 12. Schaltelement 32 befindet sich in Schaltstellung S2, Schaltelement 21 in Schaltstellung S4, Schaltelement 29 in Schaltstellung S5 und Schaltelement 36 in Schaltstellung S8 (vgl. Figur 3).

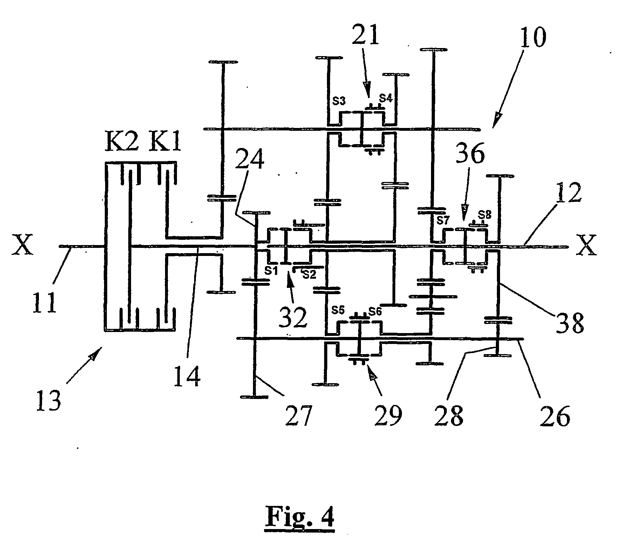

In einem zweiten Vorwärtsgang ist die Kupplung K2 geschlossen. Schaltelement 32 befindet sich in Schaltstellung S2, Schaltelement 21 in Schaltstellung S4, Schaltelement 29 in Neutralstellung und Schaltelement 36 in Schaltstellung S8. In dem zweiten Vorwärtsgang verläuft der Kraftfluss von der Eingangswelle über Kupplung K2, Zwischenwelle 14, Antriebszahnrad 24, Abtriebszahnrad 27, Vorgelegewelle 26, Antriebszahnrad 28, Zahnrad 38, Schaltelement 36 zur Getriebeabtriebswelle 12, vgl. Figur 4.

In einem dritten Vorwärtsgang ist die Kupplung K1 geschlossen. Schaltelement 32 befindet sich in Mittenstellung, Schaltelement 21 in Schaltstellung S4, Schaltelement 29 in Neutralstellung und Schaltelement 36 in Neutralstellung. Im dritten Vorwärtsgang verläuft der Kraftfluss von der Eingangswelle 11 über Kupplung K1, Zwischenwelle 15, Antriebszahnrad 18, Abtriebszahnrad 19, Vorgelegewelle 16, Schaltelement 21, Antriebszahnrad 23, Zahnrad 35, Hohlwelle 33, Schaltelement 32 zur Getriebeabtriebswelle 12.

In einem vierten Vorwärtsgang ist die Kupplung K2 geschlossen. Schaltelement 32 befindet sich in Mittenstellung. Die Schaltelemente 21 und 36 befinden sich in Neutralstellung, während Schaltelement 29 in Schaltstellung S5 geschaltet ist. Der Kraftfluss erfolgt von der Eingangswelle 11 über Kupplung K2, Zwischenwelle 14, Antriebszahnrad 24, Abtriebszahnrad 27, Vorgelegewelle 26, Schaltelement 29, Antriebszahnrad 30, Zahnrad 34, Schaltelement 32 zur Getriebeabtriebswelle 12.

In einem fünften Vorwärtsgang ist die Kupplung K1 geschlossen. Schaltelement 32 befindet sich in Mittenstellung. Die Schaltelemente 29 und 36 befinden sich in Neutralstellung, während Schaltelement 21 in Schaltstellung S3 geschaltet ist. Der Kraftfluss erfolgt von einer Eingangswelle über Kupplung K1, Zwischenwelle 15, Antriebszahnrad 18, Abtriebszahnrad 19, Vorgelegewelle 16, Schaltelement 21, Antriebszahnrad 22, Zahnrad 34, Schaltelement 32 zur Getriebeabtriebswelle 12.

In einem sechsten Vorwärtsgang ist die Kupplung K2 geschlossen. Schaltelement 32 befindet sich in Schaltstellung S1, während die Schaltelemente 21, 29 und 36 in Neutralstellung geschaltet sind. Bei dem sechsten Vorwärtsgang handelt es sich um einen Direktgang, für welchen ein Kraftfluss von der Eingangswelle über Kupplung K2 und Zwischenwelle 14 unter Vermittlung des Schaltelementes 32 zur Getriebeabtriebswelle 12 erfolgt.

In einem siebten Vorwärtsgang ist die Kupplung K1 geschlossen. Schaltelement 32 befindet sich in Schaltstellung S1. Die Schaltelemente 21, 29 befinden sich in Neutralstellung, während Schaltelement 36 in Schaltstellung S7 geschaltet ist. Der Kraftfluss erfolgt von der Eingangswelle 11 über Kupplung K1, Zwischenwelle 15, Antriebszahnrad 18, Abtriebszahnrad 19, Vorgelegewelle 16, Antriebszahnrad 20, Zahnrad 37, Schaltelement 36 zur Getriebeabtriebswelle 12.

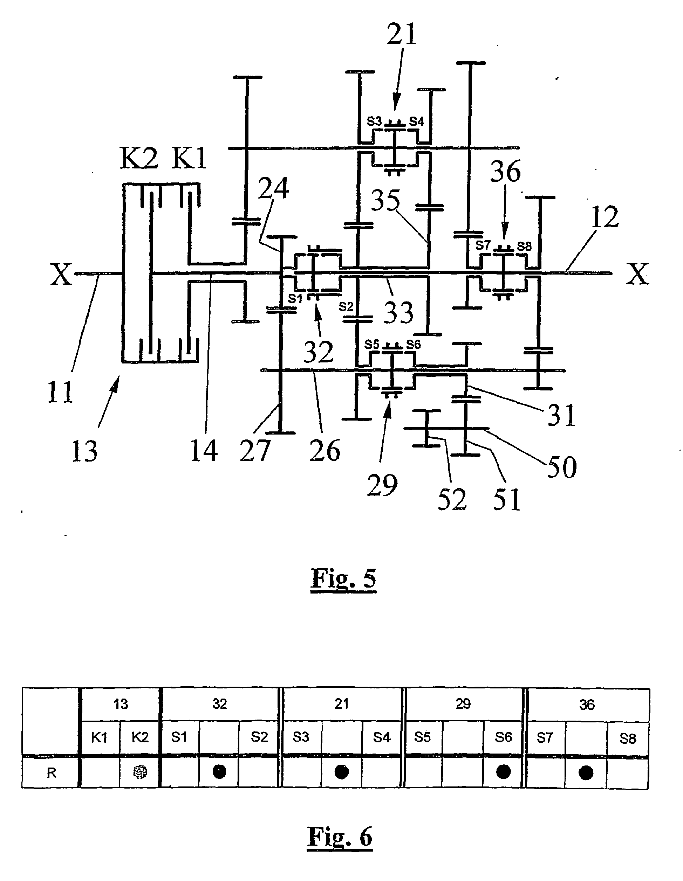

Für das zweite Ausführungsbeispiel gemäß Figur 5 ist bei im Übrigen dem Ausführungsbeispiel gemäß Figur 2 entsprechende Ausgestaltung sowie entsprechenden Schaltstellungen der Kupplung 13 und der Schaltelemente 21, 29, 32, 36 entsprechend Figur 2 das Rückwärtsgangrad 39 entfallen. Für dieses Ausführungsbeispiel wird ein einziger Rückwärtsgang realisiert, indem gegenüber einer Zwischenwelle 50, welche parallel zur Getriebeachse X-X sowie den Vorgelegewellen 26, 16 orientiert ist, ein Abtriebszahnrad 51 und ein Antriebszahnrad 52 drehfest gelagert sind. Das Abtriebszahnrad 51 kämmt mit dem Antriebszahnrad 31, während das Antriebszahnrad 52 mit dem Zahnrad 35 kämmt.

Für den Rückwärtsgang ist gemäß der Tabelle in Figur 6 Kupplung K2 geschlossen. Schaltelement 32 befindet sich in Mittenstellung. Die Schaltelemente 21, 36 befinden sich in Neutralstellung, während Schaltelement 29 in Schaltstellung S6 geschaltet ist. In dem Rückwärtsgang erfolgt der Kraftfluss von der Eingangswelle 11 über Kupplung K2, Zwischenwelle 14, Antriebszahnrad 24, Abtriebszahnrad 27, Vorgelegewelle 26, Schaltelement 29, Antriebszahnrad 31, Abtriebszahnrad 51, Zwischenwelle 50, Antriebszahnrad 52, Zahnrad 35, Hohlwelle 33, Schaltelement 32 zur Abtriebswelle 12.

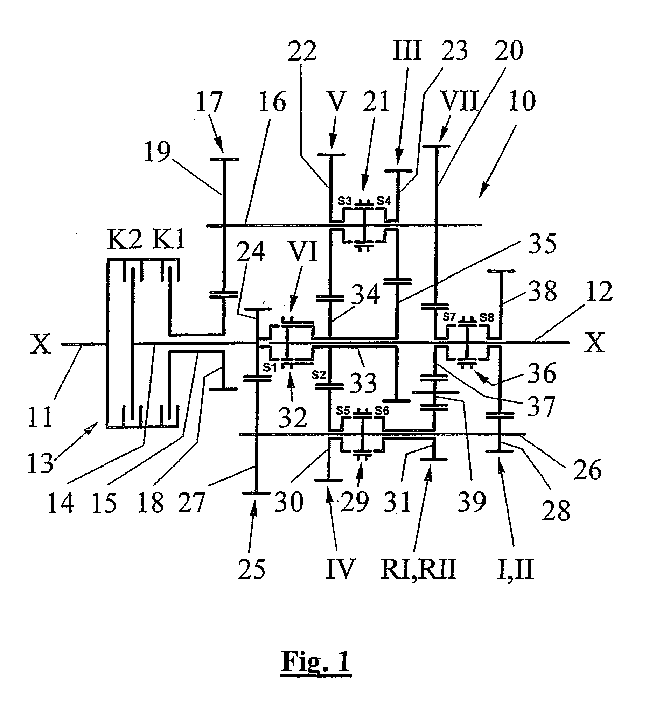

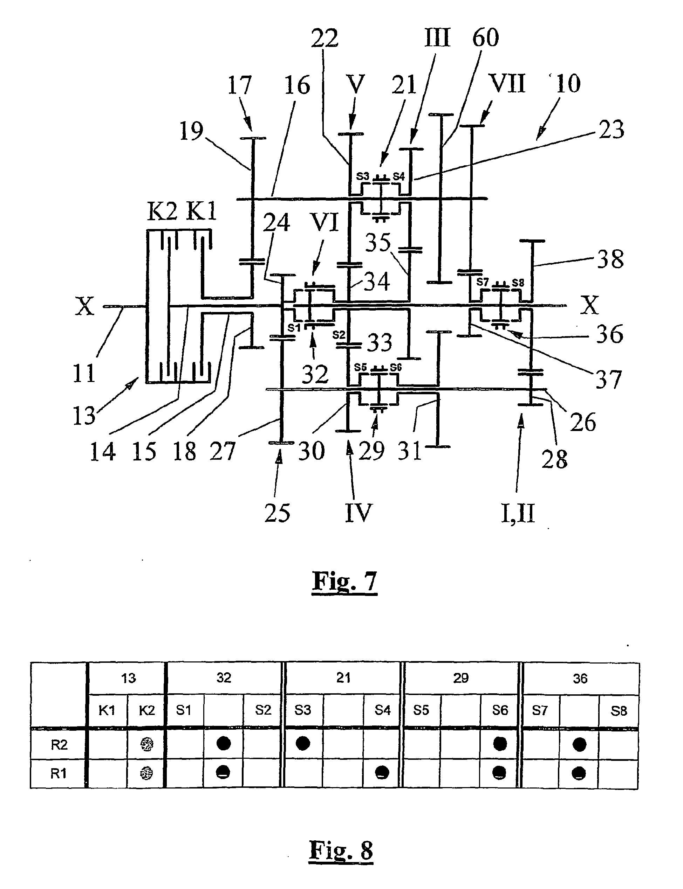

Bei ansonsten dem ersten Ausführungsbeispiel gemäß Figur 1 entsprechender Ausgestaltung ist für das dritte Ausführungsbeispiel gemäß Figur 7 ein Rückwärtsgang ausschließlich über Zahnräder realisiert, welche koaxial zur Getriebeachse X-X oder koaxial zu den durch die Vorgelegewellen 16, 26 definierten Achsen angeordnet sind. Zu diesem Zweck ist das Rückwärtsgangrad 39 entfallen. Das Antriebszahnrad 31 ist (mit vergrößertem Durchmesser) aus der Getriebeebene für die Getriebestufung VII sowie RI, RII versetzt in eine neue Getriebeebene, welche zwischen der Getriebeebene mit der Gangstufe III und der Getriebeebene mit den Gangstufe VII und RI, RII liegt. In dieser Getriebeebene kämmt das Antriebszahnrad 31 mit einem Zahnrad 60, welches drehfest mit der Vorgelegewelle 16 verbunden ist. Die Getriebeachse X-X sowie die durch die Vorgelegewellen 16, 26 definierten Achsen sind (abweichend zur Darstellung in Figur 7) im Querschnitt dreiecksförmig angeordnet.

In einem zweiten Rückwärtsgang ist die Kupplung K2 geschlossen. Das Schaltelement 32 befindet sich in der Mittenstellung. Das Schaltelement 39 befindet sich in einer Neutralstellung, während Schaltelement 39 in Schaltstellung S6 und Schaltelement 21 in Schaltstellung S3 geschaltet sind. Der Kraftfluss verläuft in dem zweiten Rückwärtsgang von einer Eingangswelle 11 über Kupplung K2, Zwischenwelle 14, Antriebszahnrad 24, Abtriebszahnrad 27, Vorgelegewelle 26, Schaltelement 29, Antriebszahnrad 31, Zahnrad 60, Vorgelegewelle 16, Schaltelement 21, Antriebszahnrad 22, Zahnrad 34, Schaltelement 32 zur Getriebeabtriebswelle 12.

In einem ersten Rückwärtsgang ist Kupplung K2 geschlossen. Das Schaltelement 32 befindet sich in der Mittenstellung. Schaltelement 36 ist in Neutralstellung geschaltet, während Schaltelement 29 in Schaltstellung S6 und Schaltelement 21 in Schaltstellung S4 geschaltet sind. Der Kraftfluss verläuft in dem ersten Rückwärtsgang von der Eingangswelle 11 über Kupplung K2, Zwischenwelle 14, Antriebszahnrad 24, Abtriebszahnrad 27, Vorgelegewelle 26, Schaltelement 29, Antriebszahnrad 31, Zahnrad 60, Vorgelegewelle 16, Schaltelement 21, Antriebszahnrad 23, Zahnrad 35, Hohlwelle 33, Schaltelement 32 zur Getriebeabtriebswelle 12.

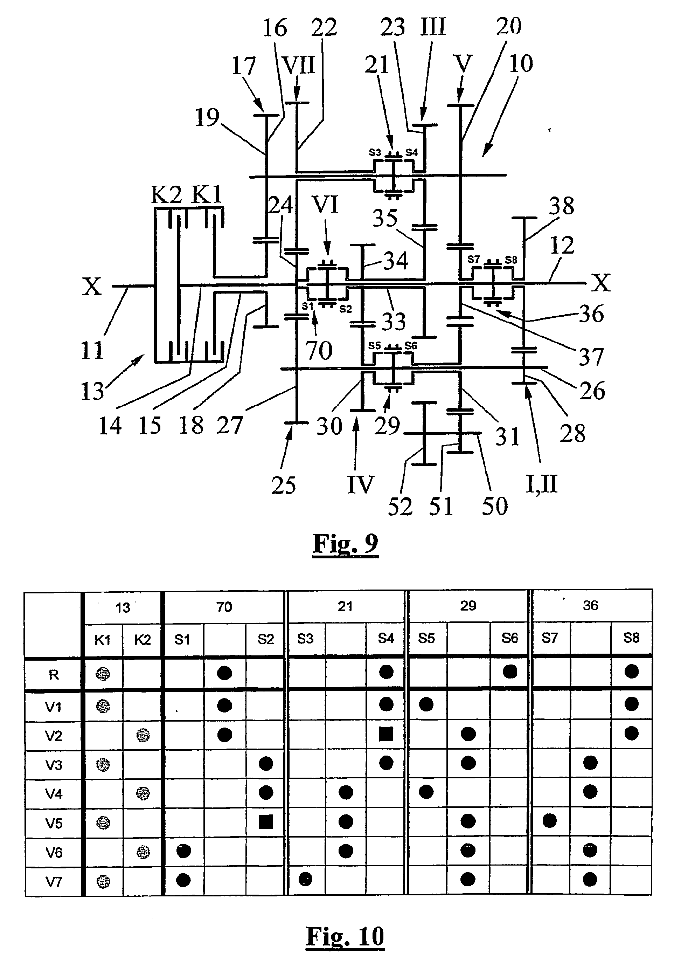

Sofern nicht abweichend beschrieben oder in Figur 9 dargestellt, entspricht das in Figur 9 dargestellte Ausführungsbeispiel im Wesentlichen dem ersten Ausführungsbeispiel gemäß Figur 1 sowie hinsichtlich der Ausgestaltung des einzigen Rückwärtsganges dem in Figur 5 dargestellten und beschriebenen Ausführungsbeispiel. Abweichend hierzu ist gemäß Figur 9 anstelle des Schaltelementes 32 ein Schaltelement 70 vorgesehen. Das Schaltelement 70 wirkt zwischen der Zwischenwelle 14 bzw. dem Antriebszahnrad 24, der Getriebeabtriebswelle 12 und der Hohlwelle 33. In einer Schaltstellung S1 verbindet das Schaltelement 70 die Zwischenwelle 14 unmittelbar mit der Getriebeabtriebswelle 12 (Direktgang). In der mittigen Neutralstellung des Schaltelementes 70 ist dieses wirkungslos. In der äußeren Schaltstellung S2 verbindet das Schaltelement 70 die Hohlwelle 33 mit der Getriebeabtriebswelle 12. Während gemäß dem in Figur 1 dargestellten Ausführungsbeispiel das Zahnrad 34 sowohl mit dem Antriebszahnrad 30 als auch mit dem Antriebszahnrad 32 kämmt, kämmt gemäß dem in Figur 9 dargestellten Ausführungsbeispiel das Zahnrad 34 ausschließlich mit dem Antriebszahnrad 30. Das Antriebszahnrad 22 kämmt in einer gemeinsamen Getriebeebene mit dem Abtriebszahnrad 27 mit dem Antriebszahnrad 24. In der folgenden axialen Reihenfolge sind somit folgende Getriebeebenen gebildet:

- Doppelkupplung 13,
- Konstante 17 mit Zahnrädern 18, 19,
- Konstante 25 und Gangstufe VII mit den Zahnrädern 22, 24, 27,
- Schaltelement 70,
- Gangstufe IV mit Zahnrädern 30, 34,
- Schaltelemente 29, 21,
- Gangstufe III mit Zahnrädern 23, 35 sowie das dem Rückwärtsgang zugeordnete Zahnrad 52,
- Gangstufe V mit Zahnrädern 20, 37 sowie dem Rückwärtsgang zugeordneten Zahnrädern 31, 51,
- Schaltelement 36,
- Gangstufe I, II mit Zahnrädern 28, 38.

Gemäß Figur 10 ist im einzigen Rückwärtsgang die Kupplung K1 geschlossen. Schaltelement 70 befindet sich in Neutralstellung, während Schaltelement 21 in Schaltstellung S4, Schaltelement 29 in Schaltstellung S6 und Schaltelement 36 in Schaltstellung S8 geschaltet sind. Der Kraftfluss erfolgt von der Eingangswelle 11 über Kupplung K1, Zwischenwelle 15, Antriebszahnrad 18, Abtriebszahnrad 19, Vorgelegewelle 16, Schaltelemente 21, Antriebszahnrad 23, Zahnrad 35, Antriebszahnrad 52, Zwischenwelle 50, Abtriebszahnrad 51, Antriebszahnrad 31, Schaltelement 29, Vorgelegewelle 26, Antriebszahnrad 28, Zahnrad 38, Schaltelement 36 zur Getriebeabtriebswelle 12.

In einem ersten Vorwärtsgang ist die Kupplung K1 geschlossen. Das Schaltelement 70 befindet sich in Neutralstellung. Schaltelement 21 ist in Schaltstellung S4, Schaltelement 29 in Schaltstellung S5, Schaltelement 36 in Schaltstellung S8 geschaltet. Der Kraftfluss erfolgt von der Eingangswelle 11 über Kupplung K1, Zwischenwelle 15, Antriebszahnrad 18, Abtriebszahnrad 19, Vorgelegewelle 16, Schaltelement 21, Antriebszahnrad 23, Zahnrad 35, Hohlwelle 33, Zahnrad 34, Antriebszahnrad 30, Schaltelement 29, Vorgelegewelle 26, Antriebszahnrad 28, Zahnrad 38, Schaltelement 36 zur Getriebeabtriebswelle 12.

In einem zweiten Vorwärtsgang ist die Kupplung K2 geschlossen. Die Schaltelemente 70 und 29 sind in Neutralstellung, Schaltelement 29 in Schaltstellung S4 und Schaltelement 36 in Schaltstellung S8 geschaltet. Ein Kraftfluss erfolgt von der Eingangswelle 11 über Kupplung K2, Zwischenwelle 14, Antriebszahnrad 24, Abtriebszahnrad 27, Vorgelegewelle 26, Antriebszahnrad 28, Zahnrad 38, Schaltelement 36 zur Getriebeabtriebswelle 12.

In einem dritten Vorwärtsgang ist die Kupplung K1 geschlossen. Die Schaltelemente 29, 36 befinden sich in Neutralstellung, während Schaltelement 70 in Schaltstellung S2 und Schaltelement 21 in Schaltstellung S4 geschaltet sind. Der Kraftfluss erfolgt von der Eingangswelle 11 über Kupplung K1, Zwischenwelle 15, Antriebszahnrad 18, Abtriebszahnrad 19, Vorgelegewelle 16, Schaltelement 21, Antriebszahnrad 23, Zahnrad 35, Hohlwelle 33, Schaltelement 70 zur Getriebeabtriebswelle 12.

In einem vierten Vorwärtsgang ist die Kupplung K2 geschlossen. Die Schaltelemente 21, 36 befinden sich in Neutralstellung, während Schaltelement 70 in Schaltstellung S2 und Schaltelement 29 in Schaltstellung S5 geschaltet sind. Der Kraftfluss erfolgt von der Eingangswelle 11 über Kupplung K2, Zwischenwelle 14, Antriebszahnrad 24, Abtriebszahnrad 27, Vorgelegewelle 26, Schaltelement 29, Antriebszahnrad 30, Zahnrad 34, Hohlwelle 33, Schaltelement 70 zur Getriebeabtriebswelle 12.

In einem fünften Vorwärtsgang ist die Kupplung K1 geschlossen. Die Schaltelemente 21, 29 befinden sich in Neutralstellung, während Schaltelement 70 in Schaltstellung S2 und Schaltelement 36 in Schaltstellung S7 geschaltet sind. Der Kraftfluss erfolgt von der Eingangswelle 11 über Kupplung K1, Zwischenwelle 15, Antriebszahnrad 18, Abtriebszahnrad 19, Vorgelegewelle 16, Antriebszahnrad 20, Zahnrad 37, Schaltelement 36 zur Getriebeabtriebswelle 12.

In einem sechsten, als Direktgang ausgebildeten Vorwärtsgang ist die Kupplung K2 geschlossen. Die Schaltelemente 21, 29, 36 befinden sich in Neutralstellung, während Schaltelement 70 in Schaltstellung S1 geschaltet ist. Der Kraftfluss erfolgt hier von der Eingangswelle über Kupplung K2, Zwischenwelle 14, Schaltelement 70 zur Getriebeabtriebswelle 12.

In einem siebten Vorwärtsgang ist Kupplung K1 geschlossen. Schaltelemente 29 und 36 befinden sich in Neutralstellung. Schaltelement 70 ist wahlweise in Neutralstellung geschaltet oder in Schaltstellung S1. Schaltelement 21 ist in Schaltstellung S3 geschaltet. Der Kraftfluss erfolgt von der Eingangswelle über Kupplung K1, Zwischenwelle 15, Antriebszahnrad 18, Abtriebszahnrad 19, Vorgelegewelle 16, Schaltelement 21, Antriebszahnrad 22, Antriebszahnrad 24, Schaltelement 70 zur Getriebeabtriebswelle 12.

Gemäß Figur 9 ist der einzige Rückwärtsgang analog zum ersten Gang als Windungsgang unter Verwendung beider Teilgetriebe ausgestaltet. Ein Wechsel vom ersten Vorwärtsgang zum Rückwärtsgang oder umgekehrt ist lediglich durch Betätigung des Schaltelementes 29 ermöglicht. Abweichend zu den übrigen Ausgestaltungsformen der Erfindung finden gemäß Figur 9 ausschließlich konventionelle Schaltelemente mit einer mittigen Neutralstellung Einsatz. Gemäß dem in Figur 9 dargestellten Ausführungsbeispiel sind sämtliche Vorwärtsgänge sequentiell lastschaltbar, während der Übergang vom ersten Vorwärtsgang zum Rückwärtsgang (und umgekehrt) nicht lastschaltbar ist. Unabhängig von der Profilverschiebung und einem gewählten Achsabstand sind die Stufensprünge 1->2 und 3->4 identisch.

In den Tabellen gemäß Figur 2, Figur 6, Figur 8 und Figur 10 sind mit Quadraten Schaltzustände angegeben, welche zur Realisierung des jeweils angegebenen Ganges nicht zwingend erforderlich sind. Durch eine Wahl des in den Tabellen angegebenen Schaltzustandes können jedoch möglicherweise unnötige Schaltbewegungen vermieden werden. Von den dargestellten Schaltstellungen abweichende Schaltstellungen sind ebenfalls möglich.

Für sämtliche dargestellten Ausführungsbeispiele können Durchmesser- und Übersetzungsverhältnisses des Doppelkupplungsgetriebes den Räderplänen in der Zeichnung entnommen werden, insbesondere

■ die exakten Durchmesserverhältnisse,
■ ob eine Übersetzung ins Langsame oder ins Schnelle erfolgt oder
■ ob eine Übersetzung einer Getriebestufe größer oder kleiner ausgebildet ist als die Übersetzung einer anderen Getriebestufe.

Für die dargestellten Ausführungsformen werden als zusätzliche Zwischenstufe in dem ersten Vorwärtsgang die Gangstufen des dritten und vierten Vorwärtsganges (letztere in invertierter Richtung) verwendet, welche zusammen eine zusätzliche Übersetzung ins Langsame ergeben. Aus diesem Grund kann die Eingangsübersetzung (Konstante 17) relativ lang gewählt werden.

Die Anzahl s der (minimal) erforderlichen Schalteinheiten für eine kompakte erfindungsgemäße Ausgestaltung errechnet sich aus einer Anzahl N von Vorwärtsgängen nach folgendem Prinzip:

Ist N ungerade, so ist

$$s = (N + 1)/2 \quad ;$$

ist N gerade, so ist

$$s = (N+2)/2 \quad .$$

Die dargestellten Wellenachsen können in einer Ebene oder aber in einer räumlichen Anordnung, insbesondere in Dreiecksanordnung angeordnet sein.

**Patentansprüche**

1. Doppelkupplungsgetriebe für ein Kraftfahrzeug mit

   a) N unter Last schaltbaren Vorwärtsgängen und mindestens einem Rückwärtsgang,
   b) zwei koaxial zueinander und zu einer Getriebeachse (X-X) angeordneten Zwischenwellen (14, 15), welche nach Maßgabe einer Doppelkupplung (13) jeweils mit einer Eingangswelle (11) in Antriebsverbindung bringbar sind und von denen eine Zwischenwelle (15) als Hohlwelle ausgebildet ist,
   c) zwei Vorgelegewellen (16, 26), welche parallel zueinander sowie parallel zu der Getriebeachse (X-X) angeordnet sind,
   d) wobei die Eingangswelle (11) koaxial zu der Getriebeachse (X-X) angeordnet ist sowie
   e) eine Getriebeabtriebswelle (12) koaxial zu der Getriebeachse (X-X) angeordnet ist,
   f) wobei für mindestens einen ersten Vorwärtsgang A zwischen die Eingangswelle (11) und die Getriebeabtriebswelle (12) vier Übersetzungsstufen (Konstante 17; Gangstufe III; Gangstufe IV; Gangstufe I, II) zwischengeschaltet sind,
   g) für mindestens einen weiteren Vorwärtsgang B lediglich zwei Übersetzungsstufen (Gangstufe IV; Gangstufe I, II) zwischen die Eingangswelle (11) und eine Getriebeabtriebswelle (12) zwischengeschaltet sind und
   h) für mindestens einen Vorwärtsgang A sowie einen Vorwärtsgang B der Kraftfluss über (mindestens) ein gleiches Zahnrad (34) verläuft,
   i) für den mindestens einen Vorwärtsgang A mit vier zwischengeschalteten Übersetzungsstufen in den Kraftfluss zwischen Eingangswelle (11) und Getriebeabtriebswelle (12) zwei miteinander drehfest verbundene Zahnräder (34, 35) zwischengeschaltet sind, welche um die Getriebeachse (X-X) rotieren, wobei

   - in dem Vorwärtsgang A eines dieser drehfest verbundenen Zahnräder (35) das Antriebsmoment von einer Vorgelegewelle (16) übernimmt und das andere Zahnrad (34) dieser drehfest verbundenen Zahnräder das Antriebsmoment an die andere Vorgelegewelle (26) übergibt und in einem weiteren Vorwärtsgang B zumindest eines dieser drehfest verbundenen Zahnräder (34; 35) das Antriebsmoment zwischen einer koaxial zur Getriebeachse (X-X) angeordneten Getriebewelle (12) und einer Vorgelegewelle (16; 26) überträgt

   **dadurch gekennzeichnet,**
   **dass** mindestens ein weiteres Schaltelement (21, 29, 36) seine Neutralstellung in einer mittleren Schaltstellung hat, während mindestens ein Schaltelement (32) seine Neutralstellung in einer äußeren Schaltstellung hat, welches

   - in einer ersten Schaltstellung (S1) eine Zwischenwelle (14) mit der Getriebeabtriebswelle (12) verbindet, so dass ein Direktgang gebildet ist,
   - in einer zweiten Schaltstellung die drehfest verbundenen Zahnräder (34, 35) mit der Getriebeabtriebswelle (12) verbindet und
   - in einer dritten Schaltstellung (S2) keine Verbindung zwischen zugeordneten Getriebeelementen (14, 12, 34, 35, 33) herstellt,
   - wobei die zweite Schaltstellung zwischen der ersten Schaltstellung (S1) und der dritten Schaltstellung (S2) liegt.

2. Doppelkupplungsgetriebe nach Anspruch 1, **dadurch gekennzeichnet,** **dass** die drehfest verbundenen Zahnräder (34; 35) über eine Hohlwelle (33) miteinander verbunden sind, welche von einer Getriebewelle, insbesondere der Getriebeabtriebswelle (12), durchsetzt ist.

3. Doppelkupplungsgetriebe nach einem der vorhergehenden Ansprüche, **dadurch gekennzeichnet,** **dass** ein Vorwärtsgang, insbesondere der vorvorletzte, der vorletzte oder der letzte Vorwärtsgang, als Direktgang ausgebildet ist.

4. Doppelkupplungsgetriebe nach einem der vorhergehenden Ansprüche, **dadurch gekennzeichnet,**

**dass** die dem niedrigsten Vorwärtsgang zugeordnete Eingangsübersetzung (Konstante 17) länger ausgelegt ist als die andere Eingangsübersetzung (Konstante 25).

5. Doppelkupplungsgetriebe nach einem der vorhergehenden Ansprüche,
   **dadurch gekennzeichnet,**
   **dass** das Doppelkupplungsgetriebe über mindestens sieben Gänge verfügt, welche über vier Schaltelemente (21, 29, 32, 36; 70) schaltbar sind.

6. Doppelkupplungsgetriebe nach einem der Ansprüche 1 bis 5,
   **dadurch gekennzeichnet,**
   **dass** die drehfest verbundenen Zahnräder (34, 35) über ein Schaltelement, insbesondere das Schaltelement (32) mit einer Neutralstellung in einer äußeren Schaltstellung, mit einer Zwischenwelle (14) drehfest verbindbar sind.

7. Doppelkupplungsgetriebe nach einem der Ansprüche 1 bis 6,
   **dadurch gekennzeichnet,**
   **dass** ein Zahnrad (34) der drehfest verbundenen Zahnräder schrägverzahnt ausgebildet ist mit einem Winkel $\alpha$ sowie das andere Zahnrad (35) der drehfest verbundenen Zahnräder schrägverzahnt ausgebildet ist mit einem Winkel $\beta$, wobei die Winkel $\alpha$ und $\beta$ gleiche Vorzeichen aufweisen und derart dimensioniert sind, dass sich die auf die beiden drehfest verbundenen Zahnräder (34, 35) in dem ersten Vorwärtsgang wirkenden Axialkräfte ungefähr aufheben.

8. Doppelkupplungsgetriebe nach einem der vorhergehenden Ansprüche,
   **dadurch gekennzeichnet,**
   die Vorgelegewellen (16, 26), die Zwischenwellen (14, 15) und die Getriebeabtriebswelle (12) in einer Ebene liegen.

9. Doppelkupplungsgetriebe nach einem der Ansprüche 1 bis 7,
   **dadurch gekennzeichnet,**
   die beiden Vorgelegewellen (16, 26) und die Getriebeachse (X-X) im Querschnitt dreiecksförmig angeordnet sind.

10. Doppelkupplungsgetriebe nach einem der vorhergehenden Ansprüche,
    **dadurch gekennzeichnet,**
    **dass** eine Drehrichtungsumkehr für den Rückwärtsbetrieb über ein zusätzliches Zwischenrad (39) realisiert ist.

11. Doppelkupplungsgetriebe nach einem der Ansprüche 1 bis 9,

**dadurch gekennzeichnet,**
**dass** eine Drehrichtungsumkehr für den Rückwärtsbetrieb über eine zusätzliche Zwischenwelle (50) realisiert ist.

12. Doppelkupplungsgetriebe nach einem der Ansprüche 1 bis 9,
    **dadurch gekennzeichnet,**
    **dass** die eine Drehrichtungsumkehr für den Rückwärtsbetrieb realisierenden Zahnräder koaxial zur Getriebeachse (X-X) und/oder zu den beiden Vorgelegewellen (16, 26) angeordnet sind.

13. Doppelkupplungsgetriebe nach einem der vorhergehenden Ansprüche,
    **dadurch gekennzeichnet,**
    **dass** die Stufensprünge 1->2 und 3->4 identisch sind.

14. Doppelkupplungsgetriebe nach einem der vorhergehenden Ansprüche,
    **dadurch gekennzeichnet,**
    **dass** die Gänge 1 bis 4 geometrisch gestuft und die Gänge 4 bis 7 progressiv gestuft sind.

15. Doppelkupplungsgetriebe nach einem der Ansprüche 2 bis 14,
    **dadurch gekenzeichnet,**
    dass die drehfest verbundenen genannten Zahnräder (34, 35) Gangstufen zur Realisierung der Vorwärtsgänge 3 und 4 zugeordnet sind.

**Claims**

1. twin-clutch gearbox for a motor vehicle, comprising

   a) N load-changeable forward gears and at least one reverse gear,
   b) two intermediate shafts (14, 15) arranged coaxial with each ether and with a gearbox axis (X-X), each of which, in accordance with a twin clutch (13), can be brought into drive-connection with an input shaft (11), one of the intermediate shafts being designed as a hollow shaft,
   c) two layshafts (16, 26) arranged parallel to each other and parallel to the gearbox axis (X-X),
   d) wherein the input shaft (11) is arranged coaxial with the gearbox axis (X-X), and
   e) wherein a gearbox output shaft (12) is arranged coaxial with the gearbox axis (X-X),
   f) wherein, for at least a first forward gear A, four gear ratios (constant 17. gear stage III gear stage IV: gear stage I, II) are interposed between the input shat; (11) and the gearbox output shaft (12),
   g) wherein, for at least one further forward gear 8, only two gear ratios (gear stage IV; gear stage I, II are interposed between the input shaft (11) and a gearbox output shaft (12), and

h) wherein, for at least a first forward gear A and a forward gear B, the power flow is routed via (at least) one identical gear (34),

i) wherein, for the at least one forward gears with four gear ratios interposed into the power flow between the input shaft (11) and the gearbox output shaft (12), two non-rotatably connected gears (34, 35) which rotate about the gearbox axis (7C-X) are interposes, wherein

- in the forward gear A, one of these ron-rotatably connected gears (35) takes the drive torque from a layshaft (10) and the other gear (34) of these non-rotatably connected gears transmits the drive torque to the other layshaft (26), and wherein

- in a further forward gear B, at least one of these non-rotatably connected gears (34; 35) transmits the drive torque between a gearbox shaft (12) arranged coaxial with the gearbox axis (A-A) and a layshaft (16: 26),

**characterised in that**

at least one further shifting component (21, 19, 36) has its neutral position in an intermediate shifting position, while at least one shifting component (32) has its neutral position in an outer shifting position, so that

- in a first shifting position (S1), an intermediate shaft (14) is connected to the gearbox output shaft (12), thus providing a direct drive,

- in a second shifting position, the non-rotatably connected gears (34, 35) are connected to the gearbox output shaft (12), and

- in a third shifting position (52), there is no connection between the components (14, 12 34, 35, 33),

- wherein the second shifting position lies between the first shifting position (S1) and the third shifting position (32)

2. Twin-clutch gearbox according to claim 1,
**characterised in that**
the non-rotatably connected gears (34; 35) are connected to each other by a hollow shaft (33) through which a gearbox shaft, in particular the gearbox output shaft (12), passes.

3. Twin-clutch gearbox according to any of the preceding claims,
**characterised in that**
one forward gear, in particular the antepenultimate, the penultimate or the last forward gear, is designed as direct drive.

4. Twin-clutch gearbox according to any of the preceding claims,
**characterised in that**
the input ratio (constant 17) assigned to the lowest forward gear is designed longer than the other input ratio (constant 25).

5. Twin-clutch gearbox according to any of the preceding claims,
**characterised in that**
the twin-dutch gearbox has at least seven gears which are shiftable via four shifting components (21, 29, 32, 33, 70).

6. Twin-clutch gearbox according to any of claims 1 to 5,
**characterised in that**
the non-rotatably connected gears (34, 35) can be non-rotatably connected to an intermediate shaft (14) via a shifting component, in particular the shifting component (32) with a neutral position in an outer shifting position.

7. Twin-clutch gearbox according to any of claims 1 to 6,
**characterised in that**
one gear (34) of the non-rotatably connected gears is helical with an angle $\alpha$ and the other gear (35) of the non-rotatably connected gears is helical with an angle wherein the angles $\alpha$ and $\beta$ have identical signs and are dimensioned such that the axial forces acting on the two non-rotatably connected gears (34, 35) in the first forward gear approximately balance each other.

8. Twin-clutch gearbox according to any of the preceding claims
**characterised in that**
the layshafts (16, 26), the intermediate shafts (14, 15) and the gearbox output shaft (12) lie in one plane

9. Twin-clutch gearbox according to any of claims 1 fo 7,
**characterised in that**
the two layshafts (16, 26) and the gearbox axis (X-X) are arranged to be triangular in cross-section.

10. Twin-clutch gearbox according to any of the preceding claims,
**characterised in that**
a reversal of the direction of rotation for reverse operation is based on an additional intermediate gear (39)

11. Twin-clutch gearbox according to any of claims 1 to 9,
**characterised in that**
a reversal of the direction of rotation for reverse operation is based on an additional intermediate shaft (50)

**12.** Twin-clutch gearbox according to any of claims 1 to 9,
**characterised in that**
the gears providing for a reversal of the direction of rotation for reverse operation are arranged coaxial with the gearbox axis (X-X) and/or with the two layshafts (15, 26).

**13.** Twin-clutch gearbox according to any of the preceding claims,
**characterised in that**
the gear stage steps 1 → 2 and 3 → 4 are identical.

**14.** Twin-clutch gearbox according to any of the preceding claims,
**characterised in that**
the gears 1 to 4 are staged geometrically and the gears 4 to 7 are staged progressively.

**15.** Twin-clutch gearbox according to any of claims 2 to 14,
**characterised in that**
the non-rotatably connected gears (34, 35) are assigned to gear stages for the implementation of the forward gears and 4.

**Revendications**

**1.** Boîte de vitesses à double embrayage pour un véhicule automobile avec

- N marches avant couplables sous charge et au moins une marche arrière,
- deux arbres de renvoi secondaires (14, 155) disposés coaxialement l'un par rapport a l'autre et par rapport à un axe d'engrenage (X-X) qui d'après une grandeur d'un double embrayage (13) peuvent chacun être mis en liaison d'entraînement avec un arbre d'entrée (11) et forment un arbre de renvoi secondaire (15) en tant qu'arbre creux,
- deux arbres intermédiaires (16, 26) qui sont disposes parallèlement l'un par rapport à l'autre et également parallèlement à l'axe d'engrenage (X-X)
- l'arbre d'entrée (11) étant disposé coaxialement à l'axe d'engrenage (X-X) ainsi qu'
- un arbre de sortie (12) est disposé coaxialement à l'axe d'engrenage (X-X),
- pour au moins une première marche avant A entre l'arbre d'entrée (11) et l'arbre de sortie (12) quatre rapports de multiplication (constante 17, rapport III, rapport IV, rapport I, II) étant intercalés

- pour au moins une autre marche ayant B uniquement deux rapports de multiplication (rapport IV, rapport I, II) entre l'arbre d'entrée (II) est un arbre de sortie (12) sont intercales et
- pour au moins une marche avant A ainsi qu'une marche avant B le flux de puissance s'étend (au moins) sur une même roue dentée (34)
- pour l'au moins une marche avant A avec quatre rapports de multiplication intercales dans le flux de puissance entre l'arbre d'entrée (11) et l'arbre de sortie (12) deux roues dentées (34, 35) reliées l'une à l'autre de façon à être solidaires en rotation sont intercalées, lesquelles tournent autour de l'axe d'engrenage (X-X),

- dans la marche avant A d'une de ces roues dentées reliées de façon à être solidaires en rotation, le couple d'entraînement est repris par un arbre intermédiaire (16) et l'autre roue dentée (34) de ces roues dentées reliées de façon à être solidaires en rotation fournit le couple d'entraînement à l'autre arbre intermédiaire (26) et
- dans une autre marche avant B au moins une de ces roues dentées (34, 35) reliées de façon à être solidaires en rotation transmet le couple d'entraînement entre un arbre de sortie (12) disposé coaxialement à l'axe d'engrenage (X-X) et un arbre intermédiaire (16, 26),

**caractérisée en ce que** la position neutre d'au moins un autre élément de changement de vitesse (21, 29, 36) se trouve dans une position de chargement de vitesse intermediaire, tandis que la position neutre d'au moins un élément de changement de vitesse (32) se trouve dans une position de changement de vitesse extérieure, laquelle

- dans une première position de changement de vitesse (S1) relie un arbre de renvoi secondaire (14) à l'arbre de transmission de sortie (12)formant ainsi un rapport direct,
- dans une deuxième position de changement de vitesse relie les roues dentées (34, 35) reliées de façon à être solidaires en rotation à l'arbre de sortie (12) et
- dans une troisième position de commutation (S2) ne produit aucune liaison entre les éléments de transmission associés (14, 12, 34, 35, 33).
- la deuxième position de changement de vitesse se trouvant entre la première position de changement de vitesse (S1) et la troisième position de changement de vitesse (S2).

**2.** Boîte de vitesses à double embrayage selon la revendication 1, **caractérisée en ce que** les roues dentées (34, 35) reliées de façon à être solidaires en rotation sont reliées entre elles par un arbre creux (33) qui est traversé par un arbre de transmission, en particulier l'arbre de sortie (12).

3. Boîte de vitesses à double embrayage selon l'une quelconque des revendications précédentes, **caractérisée en ce qu'**une marche avant, en particulier l'antépénuitième, l'avant dernière ou la dernière marche avant est conçue comme un rapport direct.

4. Boîte de vitesses à double embrayage selon l'une quelconque des revendications précédentes, **caractérisée en ce que** le rapport de transmission d'entrée (constante 17) associée à la marche avant la plus basse est plus longue que l'autre rapport de transmission d'entrée (constante 25).

5. Boîte de vitesses à double embrayage selon l'une quelconque dés revendications précédentes, **caractérisée en ce que** la boîte de vitesses à double embrayage dispose d'au moins sept rapports qui peuvent être couplables par quatre éléments de commutation (21, 29, 32, 36, 70).

6. Boîte de vitesses à double embrayage selon l'une quelconque des revendications 1 à 5, **caractérisée en ce que** les roues dentées (34, 35) reliées de façon à être solidaires en rotation, peuvent être reliées solidaire en rotation par un élément de commutation, en particulier l'élément de commutation (32) dont la position neutre se trouve une position de commutation extérieure, à un arbre intermédiaire.

7. Boîte de vitesses à double embrayage selon l'une quelconque des revendications 1 à 6, **caractérisée en ce qu'**une roue dentée (34) parmi les roues dentées reliées de façon à être solidaires en rotation présente une denture hélicoïdale avec un angle $\alpha$ et l'autre roue dentée (35) parmi les roues dentées reliées de façon à être solidaires en rotation présente également une denture hélicoïdale avec un angle $\beta$, les angles $\alpha$ et $\beta$ présentant le même signe et sont dimensionnés de telle manière que les forces axiales agissant sur les deux roues dentées (34, 35) reliées de façon à être solidaires en rotation soient à peu prés compensées dans la première marche avant.

8. Boîte de vitesses double embrayage selon l'une quelconque des revendications précédentes, **caractérisée en ce que** les arbres intermédiaires (16, 26), les arbres de renvoi secondaires (14, 15) et l'arbre de sortie (12) se trouvent dans un plan.

9. Boîte de vitesses à double embrayage selon l'une quelconque des revendications 1 à 7, **caractérisée en ce que** les deux arbres intermédiaires (16, 26) et l'axe d'engrenage (X-X) sont disposés en section transversale en forme triangle.

10. Boîte de vitesses à double embrayage selon l'une quelconque des revendications précédentes, **caractérisée en ce qu'**une inversion du sens de rotation pour l'état marche arrière est réalisée par un pignon intermédiaire (39) supplémentaire.

11. Boîte de vitesses à double embrayage selon l'une quelconque des revendications 1 à 9, **caractérisée en ce qu'**une inversion du sens de rotation pour l'état marche arrière est réalisée par un arbre de renvoi secondaire (50) supplémentaire.

12. Boîte de vitesses à double embrayage selon l'une quelconque des revendications 1 à 9, **caractérisée en ce que** les roues dentées réalisant une inversion du sens de rotation pour l'état marche arrière sont disposées de manière coaxiale par rapport à l'axe d'engrenage (X-X) et /ou par rapport aux deux arbres intermédiaires (16, 26).

13. Boîte de vitesses à double embrayage selon l'une quelconque des revendications précédentes, **caractérisée** les écarts 1→2 et 3→4 sont identiques.

14. Boîte de vitesses à double embrayage selon l'une quelconque des revendications précédentes, **caractérisée** les rapports 1 à 4 sont étagées de manière géométrique et les rapports 4 à 7 sont étagés de manière progressive.

15. Boîte de vitesses à double embrayage selon l'une quelconque des revendications 2 à 14, **caractérisée en ce que** les roues dentées (34, 35) reliées de façon à être solidaires en rotation sont associées à des vitesses pour la réalisation des rapports 3 et 4.

**Fig. 1**

|  | 13 |  | 32 |  |  | 21 |  |  | 29 |  |  | 36 |  |  |
|---|---|---|---|---|---|---|---|---|---|---|---|---|---|---|
|  | K1 | K2 | S1 |  | S2 | S3 |  | S4 | S5 |  | S6 | S7 |  | S8 |
| R2 |  | ◉ |  | ● |  | ● |  |  |  |  | ● |  | ● |  |
| R1 |  | ◉ |  | ● |  |  |  | ● |  |  | ● |  | ● |  |
| V1 | ◉ |  |  |  | ● |  |  | ● | ● |  |  |  |  | ● |
| V2 |  | ◉ |  |  | ■ |  |  | ■ |  | ● |  |  |  | ● |
| V3 | ◉ |  |  | ● |  |  |  | ● |  | ● |  |  | ● |  |
| V4 |  | ◉ |  | ● |  |  | ● |  | ● |  |  |  | ● |  |
| V5 | ◉ |  |  | ● |  | ● |  |  |  | ● |  |  | ● |  |
| V6 |  | ◉ | ● |  |  |  |  | ● |  | ● |  |  | ● |  |
| V7 | ◉ |  | ■ |  |  |  |  | ● |  | ● |  | ● |  |  |

**Fig. 2**

**Fig. 3**

14

**Fig. 4**

**Fig. 5**

| | 13 | | 32 | | | 21 | | | 29 | | | 36 | | |
|---|---|---|---|---|---|---|---|---|---|---|---|---|---|---|
| | K1 | K2 | S1 | | S2 | S3 | | S4 | S5 | | S6 | S7 | | S8 |
| R | | ✦ | ● | | | | ● | | | | ● | | ● | |

**Fig. 6**

**Fig. 7**

|  | 13 | | 32 | | | 21 | | | 29 | | | 36 | | |
|---|---|---|---|---|---|---|---|---|---|---|---|---|---|---|
|  | K1 | K2 | S1 | | S2 | S3 | | S4 | S5 | | S6 | S7 | | S8 |
| R2 | | ⊛ | | ● | | ● | | | | | ● | | ● | |
| R1 | | ⊛ | | ⊖ | | | | ⊖ | | | ⊖ | | ⊖ | |

**Fig. 8**

**Fig. 9**

| | 13 | | 70 | | | 21 | | | 29 | | | 36 | | |
|---|---|---|---|---|---|---|---|---|---|---|---|---|---|---|
| | K1 | K2 | S1 | | S2 | S3 | | S4 | S5 | | S6 | S7 | | S8 |
| R | ◉ | | | ● | | | | ● | | | ● | | | ● |
| V1 | ◉ | | | ● | | | | ● | ● | | | | | ● |
| V2 | | ◉ | | ● | | | | ■ | | ● | | | | ● |
| V3 | ◉ | | | | ● | | | ● | | ● | | | ● | |
| V4 | | ◉ | | | ● | | ● | | ● | | | | ● | |
| V5 | ◉ | | | | ■ | | ● | | | ● | | ● | | |
| V6 | | ◉ | ● | | | | ● | | | ● | | | ● | |
| V7 | ◉ | | ● | | | ● | | | | ● | | | ● | |

**Fig. 10**

18

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9407055 A
- DE 19860251 C1
- WO 0039484 A
- US 6250171 B1
- DE 19939334 A1
- DE 19821164 A1
- DE 10108881 A1
- DE 10102028 A1
- US 6427547 B1
- DE 10015336 A1

**In der Beschreibung aufgeführte Nicht-Patentliteratur**

- **Tenberge, P.** Doppelkupplungsgetriebe in Windungsanordnung. *Stufenlose Fahrzeuggetriebe,* 2001